## Europäisches Patentamt
## European Patent Office
## Office européen des brevets

(11) Veröffentlichungsnummer: **0 440 798 A1**

(12) # EUROPÄISCHE PATENTANMELDUNG
## veröffentlicht nach Art. 158 Abs. 3 EPÜ

(21) Anmeldenummer: 90901940.8

(51) Int. Cl.⁵: **B01D 35/06**

(22) Anmeldetag: 29.08.89

(86) Internationale Anmeldenummer: **PCT/SU89/00232**

(87) Internationale Veröffentlichungsnummer: **WO 91/03303 (21.03.91 91/07)**

(43) Veröffentlichungstag der Anmeldung: **14.08.91 Patentblatt 91/33**

(84) Benannte Vertragsstaaten: **AT DE GB IT SE**

(71) Anmelder: **OPYTNO-KONSTRUKTORSKOE BJURO KIEVSKOGO NAUCHO-ISSLEDOVATELSKOGO INSTITUTAGIGIENY TRUDA I PROFZABOLEVANY**
**ul. Saxaganskogo, 75**
**Kiev, 252033(SU)**

(72) Erfinder: **PIVEN, Jury Vasilievich**
**ul. Leiptsigskaya, 2/37-4**
**Kiev, 252015(SU)**
Erfinder: **ROMASHEV, Lazar Nikolaevich**
**ul. Akademika Bardina, 40-1-44**
**Sverdlovsk, 620147(SU)**
Erfinder: **TUPCHY, Evgeny Petrovich**
**bulvar Druzhby narodov, 28a-68**
**Kiev, 252103(SU)**
Erfinder: **GORBAN, Lev Nikolaevich**
**ul. Smirnova-Lastochkina, 14-5**
**Kiev, 252053(SU)**

(74) Vertreter: **Patentanwälte Zellentin & Partner**
**Zweibrückenstrasse 15**
**W-8000 München 2(DE)**

(54) **MAGNETISCHER FILTER.**

(57) Magnetfilter, in dessen mit einem Deckel (2) verschliessbaren Gehäuse (1) koaxial zu seiner Längsachse ($O_1$-$O_1$) ein hohles nichtmagnetisierbares Filterelement (3) befestigt ist. Im Hohlraum (K) des Filterelementes (3) sind an einem Magnethalter (14) befestigte Magnete (13a, 13b) untergebracht. Der Magnethalter (14) ist am Deckel (2) befestigt. Das Filterelement (3) ist mit auf seiner gesamten Filterungsfläche (18) verteilten Korzentratoren der magnetischen Feldstärke versehen.

Die vorliegende Erfindung bezieht sich auf Gasfilterungseinrichtungen und betrifft insbesondere Magnetfilter.

Die Praxis zeigt, dass das Arbeiten beispielsweise im Schweissbetrieb ohne Lokalisierung und Reinigung der Luft der Arbeitszone zu Berufserkrankungen (chronische Bronchitis, Pneumokoniose usw.) führt. So beträgt im Schweissbetrieb die Grösse der in der Arbeitszone des Schweissers befindlichen Mikroteilchen 0,1 bis 2,0 $\mu$m. Diese Mikroteilchen enthalten viele schädliche Stoffe, wie Mangan, Chrom und andere.

Die über die Atmungsorgane des Menschen in das Innere seines Organismus gelangenden Mikroteilchen rufen eine Intoxikation und verschiedene Berufserkrankungen hervor.

Die früher entwickelten Filter zur Reinigung der Luft der Arbeitszone von Mikroteilchen beruhen auf der Anwendung von Filterstoffen oder auf dem Auffangen der Mikroteilchen in einem elektrostatischen Feld. Die meisten beim Stahlschmelzen, Stahlgiessen und im Schweiss-betrieb gebildeten Mikroteilchen besitzen ferromagnetische Eigenschaften, was zur Schaffung von Magnetfiltern führte.

Bekannt ist ein Magnetfilter (DE, C, 1536752), in dessen mit einem Deckel verschliessbaren Gehäuse koaxial zu seiner Längsachse ein hohles nichtmagnetisierbares Filterelement befestigt ist, in dem zumindest ein Magnet untergebracht ist, der an einem am Deckel angebrachten Magnethalter befestigt ist.

Solch eine konstruktive Ausführung des Magnetfilters gestattet es, die ferromagnetischen Mikroteilchen nur bei grosser magnetischer Feldstärke wirksam aufzufangen. Der Spalt zwischen dem Magnet und dem Filterelement vermindert in wesentlichem Masse die Stärke des Magnetfeldes an der Filterungsfläche des Filterelementes wegen der Streuung der magnetischen Energie in diesem Spalt. Dies führt dazu, dass die Anwendung von Magneten geringer Leistung bei einem solchen Aufbau des Magnetfilters unmöglich ist.

Darüber hinaus liegt an der Oberfläche des Filterelementes kein grosses Gefälle der magnetischen Feldstärke vor, was auch nicht zu einem besseren Staubauffang führt. Die Erhöhung der Staubauffangwirksamkeit eines Magnetfilters derartiger Ausführung erfordert Magnete von grösserer Leistung, was zu einer Vergrösserung der Masse und einer Verteuerung des Magnetfilters führt. Versuche, ein wirksames Auffangen ferromagnetischer Teilchen mittels Magnetfiltern der erwähnten Bauart mit Magneten von geringer Leistung zu erreichen, führten nicht zum Erfolg .

Der Erfindung liegt die Aufgabe zugrunde, ein Magnetfilter zu schaffen, bei dem die Änderung der Konstruktion des Filterelementes es gestattet, an seiner Oberfläche ein Magnetfeld mit wesentlichen Gefällen der Magnetstärke zu erzeugen, was den Reinigungsgrad des zu filternden Mediums bei einer geringen Leistung der Magnete erhöht.

Die Aufgabe wird dadurch gelöst, dass bei dem Magnetfilter, in dessen mit einem Deckel verschliessbaren Gehäuse koaxial zu seiner Längsachse ein hohles nichtmagnetisierbares Filterelement befestigt ist, in dessen Hohlraum zumindest ein Magnet untergebracht ist, der an einem am Deckel angebrachten Magnethalter befestigt ist, gemäss der Erfindung das hohle nichtmagnetisiebare Filterelement mit auf seiner gesamten Filterungsfläche verteilten Konzentratoren der magnetischen Feldstärke versehen ist.

Solch eine konstruktive Ausführung des Magnetfilters sichert an der Oberfläche seines Filterelementes die Erzeugung eines Magnetfeldes mit wesentlichen Gefällen der Magnetfeldstärke, was in hohem Masse das Absetzen der ferromagnetischen Teilchen auf der Filterungsfläche des Filterelementes verbessert und letzten Endes den Reinigungsgrad des zu filternden Mediums bei geringer Leistung des Magneten erhöht. Da nur eine geringe Leistung des Magneten erforderlich ist, kann man diesen aus billigen Stoffen herstellen, seine Masse und Abmessungen veringern, was schliesslich zu einer Verbilligung des Magnetfilters führt.

Es ist vorteilhaft, dass die Konzentratoren der magnetischen Feldstärke Wendelwindungen darstellen, die aus einem Material mit geringer Koerzitivkraft ausgeführt sind.

Es ist auch vorteilhaft, dass die Konzentratoren der magnetischen Feldstärke Ringe darstellen, die auch aus einem Material von geringer Koerzitivkraft bestehen.

Eine derartige Konstruktion der Magnetfeldkonzentratoren gestattet es, die Energie des Magnetfeldes des Filterelementes an seiner Filterungsfläche zu konzentrieren, wobei das Gefälle des Magnetfeldes zusätzlich vergrössert wird.

Die Ausführung der Konzentratoren der magnetischen Feldstärke (Wendel, Ringe) aus einem Material mit geringer Koerzitivkraft erlaubt es, nach Wegnahme des Magnetfeldes diese vollständig zu entmagnetisieren, was seinerseits die Reinigung des Filterelementes verbessert.

Die Wendelwindungen und Ringe müssen auf der Oberfläche des Filterelementes derart angeordnet sein, dass die Kraftlinien des im Innenraum des Filterelementes untergebrachten Magneten die Wendelwindungen oder die Ringe unter einem Winkel von ca. 90° schneiden.

Beim Eintreten des zu filternden Mediums in die Wirkungszone des Magnetfeldes nimmt die Absetzgeschwindigkeit der ferromagnetischen Mikroteilchen auf die Oberfläche des Filterelementes durch Erzeugung eines Magnetfeldes mit wesentlichen Gefällen der Feldstärke an dieser Filterungsfläche und Erhöhung der Magnetfeldstärke durch Konzentration dieses Magnetfeldes auf der Oberfläche des Filterelementes zu. Die Bildung eines Magnetfeldes mit wesentlichen Gefällen der Feldstärke und dessen Konzentration auf der Oberfläche des Filterelements erfolgt durch die eingebauten Wendelwindungen oder Ringe. Die magnetisierbaren Mikroteilchen werden unter der Wirkung der Magnetkräfte zu grösseren fadenartigen Aggregaten vereinigt und werden längs der Kraftlinien des Magnetfeldes und zwar auf der Oberfläche des Filterelementes zwischen den Wendelwindungen oder zwischen den Ringen gelagert.

Die fadenartigen Aggregate erfüllen die Rolle eines Magnetgewebes, auf dessen Fläche die nichtmagnetisierbaren Teilchen zurückgehalten werden, was auch zu einer Erhöhung des Reinigungsgrades des zu filternden Mediums führt.

Im Falle, wenn auf der Filterungsfläche des Filterelementes Ringe befestigt sind, ist es vorteilhaft, dass die Nachbarringe mit verschiedenen Aussendurchmessern ausgeführt sind, was der Filterungsfläche des Filterelementes eine gefaltete Form verleiht und somit das Staubaufnahmevermögen des Filterelementes durch den entstandenen Zwischenfaltenraum erhöht.

Das Filterelement ist mit den Magnetpolen mittels Magnetleitern verbunden, die mit dem Magneten und den Konzentratoren der magnetischen Feldstärke einen geschlossenen Magnetkreis bilden. Dies verhindert eine Streuung der magnetischen Energie und vergrössert damit die magnetische Feldstärke auf der Oberfläche des Filterelementes und folglich die Wirksamkeit des Auffangens magnetisierbarer Teilchen.

Es ist vorteilhaft, dass die Magnetleiter aus einem Material mit geringer Koerzitivkraft ausgeführt sind, was es gestattet, nach der Wegnahme des Magnetfeldes diese vollständig zu entmagnetisieren und damit den Reinigungsvorgang des Filterlementes zu verbessern.

Die Vorteile der Erfindung sollen durch folgende konkrete Ausführungsbeispiele unter Bezugnahme auf Zeichnungen erläutert werden. Es zeigt:

Fig. 1 - ein gemäss der Erfindung ausgeführtes Magnetfilter im Längsschnitt;

Fig. 2 - Stelle A in Fig. 1;

Fig. 3 - eine Ausführungsform des erfindungsgemässen Filters im Längsschnitt;

Fig. 4 - Stelle B in Fig. 3.

Das erfindungsgemässe Magnetfilter dient zum Auffangen ferromagnetischer Teilchen bei der Reinigung von Luft, die durch Festkomponenten von Schweissaerosol verunreinigt ist. Der Grad der Luftreinigung mittels dieses Filters erreicht 99%.

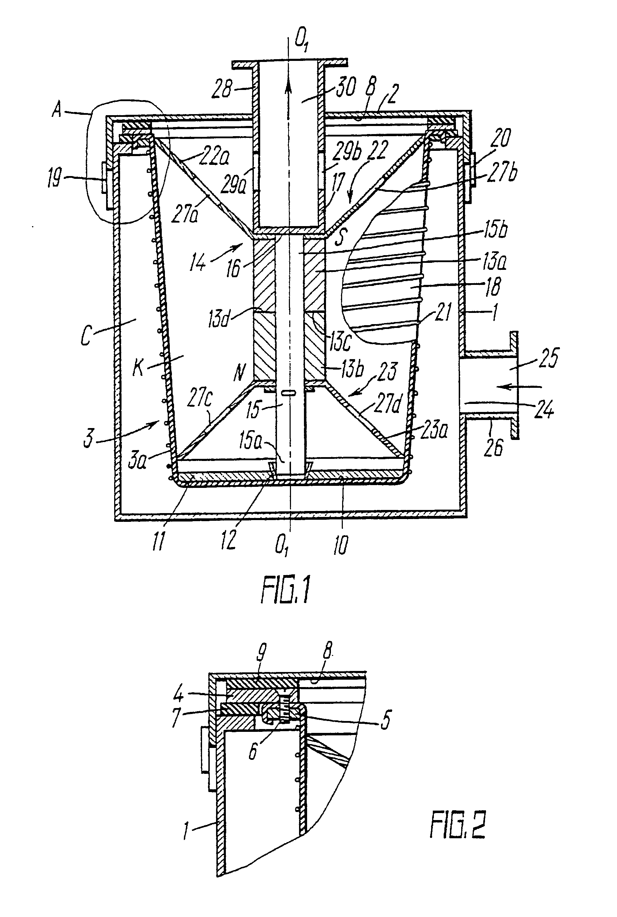

Das Magnetfilter enthält ein mit einem Deckel 2 verschliessbares Gehäuse 1 (Fig. 1). Im Hohlraum C des Gehäuses 1 ist koaxial zu seiner Längsachse $O_1$-$O_1$ ein hohles nichtmagnetisierbares Filterelement 3 befestigt. Bei dieser Ausführungsform stellt das hohle Filterelement 3 einen aus Lavsantrikotage ausgeführten Sack 3a dar, dessen Enden zwischen mittels Schrauben 6 verbundenen Ringen 4 (Fig. 2), 5 festgemacht sind. Der Ring 4 liegt auf einer am Gehäuse 1 befestigten Gummidichtung 7. An der inneren Stirnfläche 8 des Deckel 2 ist eine Gummidichtung 9, die mit dem Ring 4 in Berührung steht, angeklebt. Auf dem Boden 10 (Fig. 1) des Sackes 3a ist eine Scheibe 11 angeordnet, in deren Mitte eine Buchse 12 sitzt. Im Hohlraum K des Filterelementes 3 ist mindestens ein Magnet untergebracht; bei dieser Ausführungsform ist das Magnetfilter mit zwei Ringdauermagneten 13a, 13b versehen. Die Ringmagnete 13a, 13b sind koaxial zu der Längsachse $O_1$-$O_1$ des Gehäuses 1 derart angeordnet, dass ihre Stirnflächen 13c und 13d mit ungleichnamigen Polen in Berührung stehen. Die Ringmagnete 13a, 13b sind an einem Magnethalter 14 befestigt. Der Magnethalter 14 stellt einen Stab 15 dar, dessen eines Ende 15a in der Buchse 12 aufgenommen und dessen anderes Ende 15b an der Aussenstirnfläche 16 einer Hülse 17 befestigt ist. Die Hülse 17 ist im Deckel 2 angeordnet. Die geometrische Achse des Stabes 15, die geometrische Achse der Hülse 17 und die Längsachse $O_1$–$O_1$ stimmen überein. Das hohle nichtmagnetisierbare Filterelement 3 ist mit Konzentratoren der magnetischen Feldstärke versehen, die auf seiner gesamten Filterungsfläche 18 verteilt sind. Der Deckel 2 ist mit dem Gehäuse 1 mittels Schlossverbindungen 19,20 verbunden. Die Konzentratoren der magnetischen Feldstärke stellen Windungen einer Wendel 21 dar. Die Wendel 21 ist aus einem Material mit geringer Koerzitivkraft, gegebenenfalls aus niedriggekohltem Stahl, ausgeführt. Das Filterelement 3 ist mit dem Pol S des Ringmagneten 13a über einen Magnetleiter 22 und mit dem Pol N des Ringmagneten 13b über einen Magnetleiter 23 verbunden. Die Magnetleiter 22,23 stellen Tellerscheiben 22a, 23a aus einem Material mit geringer Koerzitivkraft, gegebenenfalls aus niedriggekohltem Stahl, dar.

Im Gehäuse 1 ist eine Öffnung 24 ausgeführt, die mit einem Hohlraum 25 eines am Gehäuse 1 befestigten Stutzens 26 in Verbindung steht. Der Hohlraum 25 des Stutzens 26 steht mit dem zu filternden Medium, gegebenenfalls mit der mit Schweissaerosol verunreinigten Luft, mittels einer biegsamen Rohrleitung (nicht dargestellt) in Verbindung.

In den Tellerscheiben 22a, 23a sind eine Reihe von Bohrungen 27a, 27b, 27c, 27d ausgeführt. In der Seitenwand 28 der Hülse 17 sind ebenfalls Bohrungen 29a, 29b vorgesehen.

Der Innenraum 30 der Hülse 17 steht mit einem Mittel zur zwangsläufigen Förderung des zu filternden Mediums in Verbindung, gegebenfalls stellt das Mittel ein Gebläse dar.

Das Magnetfilter funktioniert folgenderweise. Man ordnet das Filter in der Zone des Schweissarbeitsplatzes an. Man schaltet das Gebläse ein und führt die biegsame Rohrleitung in die Zone der Bildung des Schweissaerosols zu. Das Schweissaerosol gelangt über eine (in der Zeichnung nicht dargestellte biegsame Rohrleitung und den Hohlraum 25 des Stutzens 26 in den Hohlraum C des Gehäuses 1, wo es in den Wirkungsbereich der durch die Magnete 13a, 13b erzeugten Magnetkräfte gerät, deren magnetische Energie über die Tellerscheiben 22a, 23a zur Filterungsfläche 18 des Filterelementes 3 übertragen wird. Die auf der gesamten Filterungsfläche 18 verteilten Windungen der Wendel 21 schneiden sich mit den von den Polen N,S der Magnete 13a, 13b und den Tellerscheiben 22a, 23a ausgehenden Kraftlinien, werden magnetisiert und ändern damit den Charakter des an der Filterungsfläche 18 des Filterlementes 3 gebildeten Magnetfeldes. Im Ergebnis der Änderung des Charakters dieses Magnetfeldes findet eine Konzentration desselben auf der Filterungsfläche 18 des Filterelementes 3 statt, wodurch das gleichmässige Magnetfeld in ein Magnetfeld mit wesentlichen Gefällen bzw. Stärkenunterschieden umgewandelt wird.

Die ferromagnetischen Teilchen treten in den Hohlraum C des Gehäuses 1 ein und geraten in die Wirkungszone des magnetischen Kraftfeldes, was zu einer Koagulation dieser Teilchen führt. Diese Koagulation ist unbedeutend wegen der grossen Entfernungen zwischen den benachbarten Teilchen und wegen der geringen magnetischen Feldstärke im Hohlraum C des Gehäuses 1. Auf der Filterungsfläche 18 wird die Entfernung zwischen den ferromagnetischen Teilchen durch die bereits aufgefangenen Teilchen verringert, während die Stärke des Magnetfeldes wegen seiner Konzentration an dieser Filterungsfläche 18 viel größer ist. Das Gefälle der magnetischen Feldstärke, das sich durch die Einführung der Wendel 21 in das Feld ergibt, gestattet es, die ferromagnetischen Teilchen auf der Filterungsfläche 18 wirksam abzusetzen. Hierbei beginnen die Teilchen sich auf der Oberfläche der Wendel 21 abzusetzen und sie richten sich nach den magnetischen Kraftlinien, wobei sie fadenartige Aggregate bilden. Das weitere Auffangen der ferromagnetischen Mikroteilchen findet an den fadenartigen Aggregaten von Mikroteilchen statt, welche ihrerseits einen "magnetischen Flor" bilden, der die gesamte Filterungfläche 18 des Filterelementes 3 bedeckt. Der "magnetische Flor" trägt zur Reinigung des zu filternden Mediums auch von nichtmagnetischen Mikroteilchen bei.

Des weiteren strömt das gereinigte Medium aus dem Hohlraum K des Filterelementes 3 unter der Wirkung des Gebläses über die Bohrungen 27a, 27b, 27c, 27d in den Tellerscheiben 22a, 23a und die Bohrungen 29a, 29b in der Seitenwand 28 der Hülse 17 auf dem Magnetfilter in die Umgebung heraus.

Die oben beschriebene bevorzugte Ausführungsform der Erfindung ist nur als Beispiel angeführt und begrenzt nicht den Umfang der Erfindung. Es sind verschiedene Modifikationen und Abweichungen der Erfindung von dem Wesen und dem Umfang derselben möglich, die durch die Patentansprüche festgelegt sind.

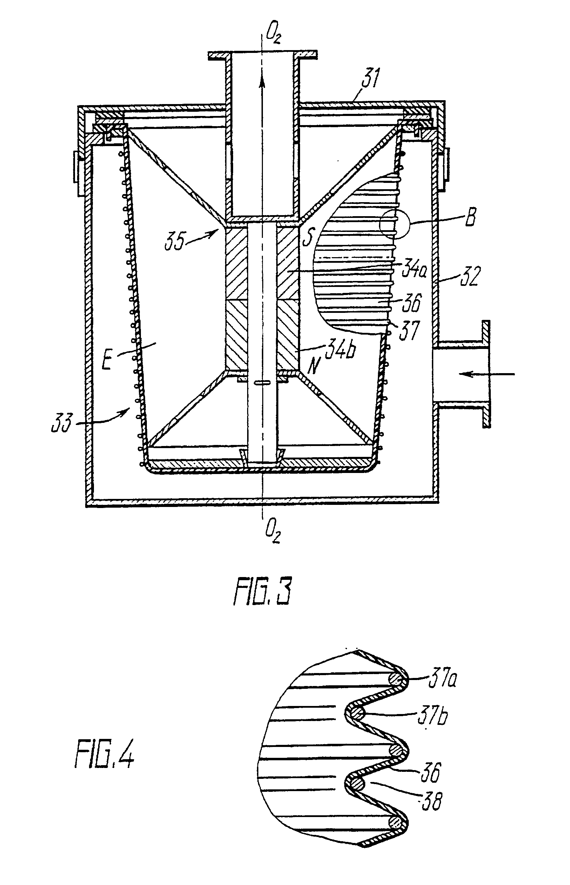

Möglich ist ein Magnetfilter, in dessen mit einem Deckel 31 (Fig. 3) verschliessbarem Gehäuse 32 koaxial zu seiner Längsachse $O_2$-$O_2$ ein hohles nichtmagnetisierbares Filterelement 33 befestigt ist. Im Hohlraum E des Filterelementes 33 sind zwei Magnete 34a, 34b untergebracht. Die Magnete 34a, 34b sind an einem am Deckel 31 angebrachten Magnethalter 35 befestigt. Das hohle nichtmagnetisierbare Filterlement 33 ist mit Konzentratoren der magnetischen Feldstärke versehen, die auf seiner gesamten Filterungsfläche 36 verteilt sind. Die Konzentratoren der magnetischen Feldstärke stellen Ringe 37 dar. Das Filterelement 33 ist aus Lavsantrikotage ausgeführt. Die Ringe 37 bestehen aus einem Material mit geringer Koerzitivkraft, gegebenenfalls aus niedrigekohltem Stahl. Die benachbarten Ringe 37a (Fig. 4), 37b haben unterschiedliche Durchmesser. Dies verleiht der Filterungsfläche 36 des Filterelementes 33 eine gefaltete Form, was seinerseits das Staubaufnahmevermögen des Filterelementes 33 dank dem Raum 38, der zwischen den Falten entsteht, erhöht.

Im übrigen sind der Aufbau und die Arbeitsweise dieser Magnetfiltervariante identisch mit dem Aufbau und der Arbeitsweise der Magnetfiltervariante, bei der als Konzentratoren der magnetischen Feldstärke Wendelwindungen verwendet sind.

Die erfindungsgemässen Magnetfilter können mit Erfolg zur Reinigung der Luft im Verlaufe von Schweissarbeiten benutzt werden. Darüber hinaus können diese Filter in metallurgischen Betrieben beim Ausführen von Stahlgiess- und Stahlschmelzoperationen verwendet werden.

**Patentansprüche**

1. Magnetfilter, in dessen mit einem Deckel (2,31) verschliessbaren Gehäuse (1,32) koaxial zu seiner Längsachse ($O_1$-$O_1$, $O_2$-$O_2$) ein hohles nichtmagnetisierbares Filterelement (3,33) befestigt ist, in dessen Hohlraum (K, E) zumindest ein Magnet (13a, 13b, 34a, 34b) untergebracht ist, der an einem am Deckel (2 ,31) angebrachten Magnethalter (14,35) befestigt ist, dadurch **gekennzeichnet**, dass das hohle nichtmagnetisierbare Filterelement (3,33) mit auf seiner gesamten Filterungsfläche (18,36) verteilten Konzentratoren der magnetischen Feldstärke versehen ist.

2. Magnetfilter nach Anspruch 1, dadurch **gekennzeichnet**, dass die Konzentratoren der magnetischen Feldstärke Windungen einer Wendel (21) aus einem Material mit geringer Koerzitivkraft darstellen.

3. Magnetfilter nach Anspruch 1, dadurch **gekennzeichnet**, dass die Konzentratoren der magnetischen Feldstärke Ringe (37) aus einem Material mit geringer Koerzitivkraft darstellen.

4. Magnetfilter nach Anspruch 1, dadurch **gekennzeichnet**, dass das Filterelement (3) mit den Polen (N,S) des Magneten (13a, 13b) mittels Magnetleitern (22,23) verbunden ist, die mit dem Magnet (13a, 13b) und den Konzentratoren der magnetischen Feldstärke einen geschlossenen Magnetkreis bilden.

5. Magnetfilter nach Anspruch 3, dadurch **gekennzeichnet**, dass die benachbarten Ringe (37a, 37b) verschiedene Aussendurchmesser haben.

6. Magnetfilter nach Anspruch 4, dadurch **gekennzeichnet**, dass der Magnetleiter (22, 23) aus einem Material mit geringer Koerzitivkraft ausgeführt ist.

FIG.1

FIG.2

FIG. 3

FIG. 4

7

**I. KLASSIFIZIERUNG DES ANMELDUNGSGEGENSTANDS** (bei mehreren Klassifikationssymbolen sind alle anzugeben)[3]

Nach der Internationalen Patentklassifikation (IPC) oder sowohl nach der nationalen Klassifikation als auch nach der IPC

IPC[5] - B01D 35/06

**II. RECHERCHIERTE SACHGEBIETE**

Recherchierter Mindestprüfstoff[4]

Klassifikationssymbole

| Klassifikationssystem | |
|---|---|
| IPC[4] | B0ID 35/06 |

Recherchierte nicht zum Mindestprüfstoff gehörende Veröffentlichungen, soweit diese unter die recherchierten Sachgebiete fallen[5]

**III. ALS BEDEUTSAM ANZUSEHENDE VERÖFFENTLICHUNGEN[14]**

| Art + | Kennzeichnung der Veröffentlichung,[16] mit Angabe, soweit erforderlich, der in Betracht kommenden Teile[17] | Betr. Anspruch Nr.[18] |
|---|---|---|
| A | US,A,3421627 (LAMBERTUS J.A. LAMMERS), 14.Januar 1969(14.01.69), Fig. 1,3 | 1—6 |
| A | US,A,3468420 (PARKER-HANNIFIN CORPORATION) 23.September 1969 (23.09.69), Fig. 2,3 | 1—6 |
| A | DE,B1,1197569 (STELZNER & CO.) 29.Juli 1965 (29.07.65), Zusammenfassung, Fig. 1, 2 | 1—6 |

+ Besondere Arten von angegebenen Veröffentlichungen:[15]

"A" Veröffentlichung, die den allgemeinen Stand der Technik definiert

"E" frühere Veröffentlichung, die erst am oder nach dem Anmeldedatum erschienen ist

"L" Veröffentlichung, die aus anderen als den bei den übrigen Arten genannten Gründen angegeben ist

"O" Veröffentlichung, die sich auf eine mündliche Offenbarung, eine Benutzung, eine Ausstellung oder andere Maßnahmen bezieht

"P" Veröffentlichung, die vor dem Anmeldedatum, aber am oder nach dem beanspruchten Prioritätsdatum erschienen ist

"T" Spätere Veröffentlichung die am oder nach dem Anmeldedatum erschienen ist und mit der Anmeldung nicht kollidiert, sondern nur zum Verständnis des der Erfindung zugrundeliegenden Prinzips oder der ihr zugrundeliegenden Theorie angegeben wurde

"X" Veröffentlichung von besonderer Bedeutung

**IV. BESCHEINIGUNG**

| Datum des tatsächlichen Abschlusses der Internationalen Recherche[2] | Absendedatum des internationalen Recherchenberichts[2] |
|---|---|
| 28.März 1990 (28.03.90) | 24.April 1990 (24.04.90) |
| Internationale Recherchenbehörde[1] ISA/SU | Unterschrift des bevollmächtigten Bediensteten[20] N.P.Shepelev |